# EUROPEAN PATENT SPECIFICATION

(11) **EP 3 087 127 B1**
(45) Date of publication and mention of the grant of the patent: **17.02.2021**
(21) Application number: 14818995.4
(22) Date of filing: 19.12.2014
(51) Int. Cl.: C08J 9/00, C08J 9/14, C08J 9/18, C08J 9/20

(54) **USE OF STERICALLY HINDERED STYRENE COMONOMER FOR IMPROVING THE THERMAL STABILITY OF EXPANDED VINYL AROMATIC POLYMER**
VERWENDUNG VON STERISCH GEHINDERTEM STYROLCOMONOMER ZUR VERBESSERUNG DER WÄRMESTABILITÄT VON EXPANDIERTEM, AROMATISCHEM VINYLPOLYMER
UTILISATION DE COMONOMÈRE DE STYRÈNE À ENCOMBREMENT STÉRIQUE POUR AMÉLIORER LA STABILITÉ THERMIQUE DE POLYMÈRES AROMATIQUES DE VINYLE EXPANSÉ

(30) Priority: 27.12.2013 EP 13461567
(43) Date of publication of application: 02.11.2016
(73) Proprietor: Synthos Dwory 7 Spolka z ograniczona odpowiedzialnoscia spolka jawna, 32-600 Oswiecim (PL)
(72) Inventor: KONDRATOWICZ, Filip, Lukasz, PL-30-382 Kraków (PL); MIKOSZEK, Marzena, PL-41-707 Ruda Slaska (PL); KOZUCH, Karol, PL-43-190 Mikolów (PL); UTRATA, Kamil, PL-43-229 Pszczyna (PL); CHYLASZEK, Marcin, PL-32-650 Witkowice (PL); ROGOZA, Jaroslaw, PL-55-093 Kielczów (PL)
(74) Representative: Eisenführ Speiser
(86) International application number: PCT/EP2014/078915
(87) International publication number: WO 2015/097115

(56) References cited:
- EP-A2- 0 032 582
- WO-A1-2012/032022

## Description

The present invention, as defined in the claims, relates to the use of p-tert-butylstyrene comonomer for improving the thermal stability of expanded vinyl aromatic polymer that (i) is prepared from polymer based on styrene monomer and that (ii) contains one or more athermanous additives. The invention also relates to processes for the preparation of expandable copolymer granulate, the expandable copolymer granulate, and copolymer foam made from such granulate.

It is generally known that the addition of athermanous fillers (such as carbon black or graphite, or minerals from the group of silicas) decreases the thermal conductivity of polymers. Examples for such types of polymers are those obtained by polymerization of vinyl aromatic monomers (in particular of styrene) and optionally comonomers. Other examples for such type of polymers are those obtained by extrusion of polystyrene and its copolymers. Typically, fillers that can absorb infrared radiation are added.

There is an increasing demand for expanded vinyl aromatic polymers with both low thermal conductivity and good dimensional stability. However, the content of carbon black may cause thermal instability. That is why thermal aging of foams comprising carbon black has a significant influence on the final dimensions of moulded blocks. Carbon black may decrease the glass transition temperature of vinyl aromatic polymers or generally increase foam heat capacity, which leads to the shrinking or change of dimensions of the moulded blocks during thermal conditioning. These phenomena may undesirably cause the formation of scrap during the sectioning of the moulded blocks.

WO 2012/032022 A1 teaches expandable vinyl aromatic polymer comprising a matrix of a vinyl aromatic polymer. In one embodiment, the vinyl aromatic polymer is a copolymer of styrene with α-methyl styrene or (meth)acrylates. In a further embodiment of WO 2012/032022 A1, the vinyl aromatic polymer is a branched aromatic ionomer, and the ionomer may be the copolymer of a first monomer (selected from a group consisting of styrene, α-methylstyrene, t-butylstyrene, p-methylstyrene, vinyl toluene, and mixtures thereof, and preferably styrene) and a second monomer which is e.g. a metal carboxylate.

EP 0 032 582 A2 teaches expanded shaped articles of a heat resistant synthetic resin. The monomeric composition comprises 20 to 100 % tertiary butyl styrene and 80 to 0 % other polymerizable monomers. According to EP 0 032 582 A2, in cases where tertiary butyl styrene is less than 20 %, the improvement in heat resistant properties sufficient for practical usefulness is not attained.

Thus, it was the object of the present invention to provide expanded aromatic polymers having both improved thermal conductivity (i.e. containing athermanous filler) and improved thermal (dimensional) stability.

It has now surprisingly been found that the thermal stability of foam blocks made of vinyl aromatic polymer comprising athermanous filler is improved by preparing copolymer foam from vinyl aromatic copolymer containing p-tert-butylstyrene comonomer.

In other words, the addition to the styrene monomer of a specific styrene comonomer possessing steric hindrance, namely p-tert-butylstyrene, increases the glass transition temperature of such a vinyl aromatic copolymer. In such a manner, the addition of this specific styrene comonomer possessing steric hindrance to the styrene monomer improves the thermal stability of vinyl aromatic copolymer, which subsequently leads to better dimensional stability of moulded blocks made thereof.

### Detailed description of the invention

Thus, in a first aspect, the invention relates to the use of p-tert-butylstyrene comonomer for increasing the glass transition temperature (Tg) of expanded vinyl aromatic polymer, wherein said polymer
i) is prepared from styrene monomer and
ii) contains one or more athermanous additives.

The polymer of the invention is based on one (or more) vinyl aromatic monomer(s), specifically styrene, and contains one or more sterically hindered comonomers, specifically p-tert-butylstyrene, i.e. it is copolymer.

The increase as obtained in accordance with the present invention (namely by use of p-tert-butylstyrene) is established by comparing Tg of the copolymer containing the p-tert-butylstyrene comonomer, with Tg of an otherwise identical homopolymer or copolymer, but not containing the p-tert-butylstyrene comonomer.

Specifically, the vinyl aromatic monomer is styrene. The sterically hindered styrene comonomer is t-butyl substituted styrene.

The vinyl aromatic copolymer is preferably comprised of 1 to 99 wt.% of styrene monomer and correspondingly 99 to 1 wt.% of sterically hindered styrene comonomer (specifically p-tert-butylstyrene monomer), as follows (amounts in wt.%, based on the total amount of monomer):

| **Monomer** | **Preferred (wt%)** | **More preferred (wt%)** | **Most preferred (wt%)** |
|---|---|---|---|
| Styrene | 1-99 | 50-98 | 75-95 |
| sterically hindered styrene comonomer (specifically p-tert-butylstyrene) | 99-1 | 2-50 | 25-5 |

In addition to the copolymer (containing one or more vinyl aromatic monomers, specifically styrene, and sterically hindered styrene comonomer, namely p-tert-butylstyrene), the expanded copolymer composition further comprises ii) one or more athermanous additives.

According to the preferred embodiment of the present invention, the total amount of athermanous additive ii) is 0.1 to 15 wt.%, based on the weight of polymer, preferably 1 to 10 wt.%, based on the weight of polymer, in particular 2 to 8 wt.%, based on the weight of polymer.

Preferably, the athermanous additive is selected from inorganic powder materials, graphite, petroleum coke, graphitized carbon black, graphite oxides, graphene, and mixtures thereof. It is preferred that the athermanous additive is selected from silica, carbon black, calcium phosphate, and mixtures thereof.

The polymer composition most preferably comprises a mineral component ii)a) and carbon black ii)b), and typically and preferably a variety of further additives, as set out below.

Preferably, component ii) is a combination of
ii)a) a mineral component containing amorphous silica, calcium phosphate, or mixtures thereof, and
ii)b) carbon black.

In terms of athermanous component ii), it is most preferred that
ii) a1) the silica is amorphous and has
   - a BET surface of 3 to 80 m²/g,
   - a particle size distribution within the range of from 3 nm to 1,000 nm, and
   the silica, if used, is present in an amount of 0.1 to less than 2 wt.%, based on the weight of the polymer,
ii)a2) the calcium phosphate has a particle size of 0.1 µm to 20 µm, and
   the calcium phosphate, if used, is present in an amount of 0.1 to 10 wt.%, based on the weight of polymer, and
ii)b) the carbon black has
   - a BET surface of more than 40 up to 250 m²/g, and
   - a sulphur content in the range of from 50 to 20,000 ppm, as measured according to ASTM D 1619, and
   the carbon black is present in an amount of 0.1 to 12 wt.%, based on the weight of the polymer.

### Silica

The silica as preferably used is amorphous and has the following specific properties:
(i) a BET surface, as measured according to the procedure explained below, in a range of from 3 to 80 m²/g and,
(ii) a particle size distribution within a range of from 3 nm to 1,000 nm.

The method to determine the silica's BET surface is based on the standards ASTM C1069 and ISO 9277 and is conducted as follows: in the first step, 2 to 5 g sample is dried at 105°C and placed in a desiccator for cooling and further degassing. Subsequently, 0.3 to 1.0 g of the dry material is weighed into a test tube and placed in the degassing unit for about 30 min. Afterwards, the sample is transferred to the measuring unit and is measured using the Micromeritics Tristar 3000 instrument.

The silica advantageously has a BET surface of from 5 to 70 m²/g, preferably 8 to 60 m²/g, such as 10 to 50 m²/g, in particular 15 to 40 m²/g, more preferably 20 to 30 m²/g, such as about 25 m²/g.

Moreover, the silica as preferably used is defined as having a particle size distribution, as measured according to the procedure detailed below, of 3 nm to 1000 nm.

The method to determine the particle size distribution is conducted as follows: in the first step, 45 g of distilled water and 5 g of sample are placed into a beaker and stirred to allow the entire sample to be wetted. Subsequently, the sample is dispersed in an external ultrasonic probe for 5 min at 100 % amplitude. The measurement is performed automatically using the primary agglomerate program in a Malvern MasterSizer 2000 device.

It is preferred that the particle size distribution of the silica is within a range of 20 to 800 nm, preferably 30 to 600 nm, such as 40 to 400 nm.

According to the present invention, the silica, if present, is used in an amount of from 0.1 to less than 2 wt.%, based on the weight of the polymer. Preferably, the silica is spherically shaped silica.

It is most preferred that the silica ii)a1) comprises the material Sidistar from ELKEM, and most preferred is that ii)a1) is Sidistar T120.

### Calcium phosphate

As mentioned above, the calcium phosphate preferably used according to the invention has a particle size, as measured by laser diffraction, of 0.1 µm to 20 µm. It is preferred that the particle size is from 1 µm to 18 µm, such as 2 µm to 15 µm. The calcium phosphate, if present, is typically used in an amount of from 0.1 to 10 wt.%, based on the weight of polymer.

The calcium phosphate is preferably tricalcium phosphate (specifically a type of hydroxyapatite).

According to one preferred embodiment, the mineral component ii)a) comprises ii)a1) the specific type of silica. According to a second preferred embodiment, the mineral component ii)a) comprises ii)a2) the specific type of calcium phosphate. According to a third preferred embodiment, the mineral component ii)a) comprises both ii)a1) the specific type of silica and ii)a2) the specific type of calcium phosphate.

Moreover, it is not necessary in accordance with the above preferred embodiment that the stated constituents of the combination, i.e. ii)a1) and/or ii)a2) and ii)b), are added at the same time. Instead, it is sufficient that ii)a1) and/or ii)a2) and ii)b) are eventually present in the granulate (expandable polymer) or foam (expanded polymer).

The total amount of component ii)a), i.e. the sum of the amounts of ii)a1) silica as specified (if present) and ii)a2) calcium phosphate as specified (if present), respectively, is typically 0.1 to less than 12 wt.% based on the weight of polymer. If both ii)a1) the specific silica and ii)a2) the specific calcium phosphate are present, then the minimum amount is typically 0.2 wt.% based on the weight of polymer.

### Carbon Black

The carbon black as preferably used has a BET surface, as measured according to ASTM 6556, of more than 40 to 250 m²/g. It is preferred that the BET surface of the carbon black is from 41 to 200 m²/g, preferably from 45 to 150 m²/g, in particular from 50 to 100 m²/g.

The sulphur content of the carbon black is typically in the range of from 50 to 20,000 ppm, as measured according to ASTM D1619, preferably from 3,000 to 10,000.

The carbon black, if present, is preferably used in an amount of 0.1 to 12 wt.%, based on the weight of the polymer.

In addition to the preferred constituents ii)a) and ii)b) above, the materials according to the invention (namely the polymer composition, the granulate, and the foam) may contain further additives, as is set out below.

For instance, a flame retardant system may be present, which is usually a combination of two types of compounds, namely a brominated aliphatic, cycloaliphatic, aromatic or polymeric compound containing at least 50 wt.% of bromine, and a second compound (so called synergistic compound) which can be bicumyl (i.e. 2,3-dimethyl-2,3-diphenylbutane) or 2-hydroperoxy-2-methylpropane.

Most preferably, and for a further reduction of the thermal conductivity of the polymer foams, the combination (of ii)a) silica and/or calcium phosphate and ii)b) carbon black) further comprises ii)c) nanoparticles of metal oxide, the nanoparticles having a 90% particle size of less than 100 nm (on the basis of a BET standard measurement), preferably a 90% particle size less than 50 nm.

In a preferred embodiment, the metal oxide is zinc oxide, magnesium oxide, or a mixture thereof, and it is most preferred that the metal oxide ii)c) is zinc oxide.

Preferably, the carbon black is combined with the nanoparticles of metal oxides such as zinc oxide (ZnO) or magnesium oxide (MgO), especially nano ZnO: 90% particle size less than 50 nm (on the basis BET standard measurement).

The metal oxides preferably have not more than 2% of contaminations.

A preferred weight ratio of metal oxide to carbon black is from 1:25 to 1:10, more preferably from 1:10 to 1:5 and in particular 1:5 to 1:2.5.

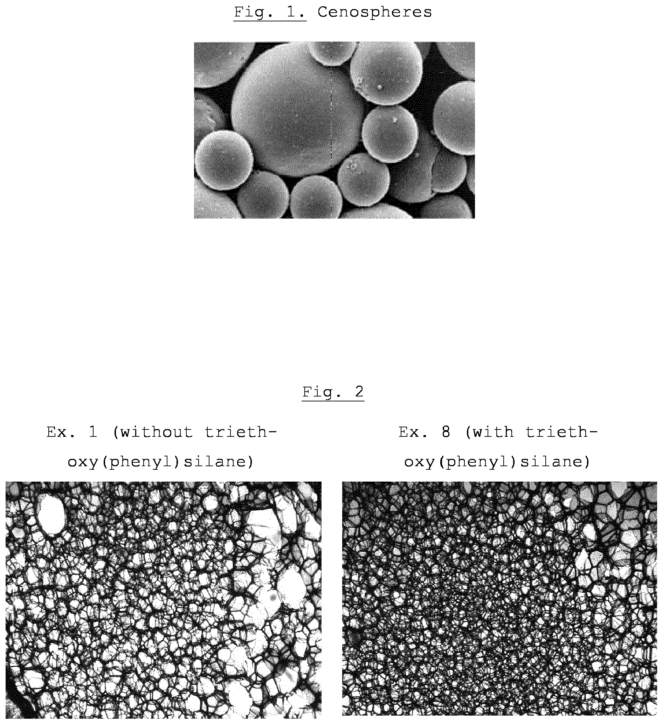

In a preferred embodiment of the present invention, the self-extinguishing properties are improved so as to achieve DIN 4102 (B1, B2), namely by using cenospheres as flame suppressors. These additives reduce flame development by creation of char, and the gases enclosed in the spherical particles furthermore work as fire annihilators. A micrograph of a typical cenosphere material is shown in Fig. 1.

It is preferred that the self-extinguishing properties of the polymer foam are improved (the improvement being measured in accordance with DIN 4102 B1 and B2 test method) by the use of specific cenospheres having
i) a particle size distribution, as determined by laser diffraction, in the range of 5-600 µm;
ii) a mineral composition of
   - 20-45 wt.%, preferably 27-33 wt.% of Al₂O₃,
   - 40-80 wt.%, preferably 55-65 wt.% of SiO₂,
   - 0.5-12 wt.%, preferably 4-8 wt.% of Fe₂O₃, and
   - optionally further oxides; and
iii) a gas composition of
   - 30-95 %, preferably 50-85 % of CO₂,
   - 5-70 %, preferably 15-50 % of nitrogen, and
   - optionally further gases.

Preferably, cenosphere products of the Omya Fillite type are used.

It is further preferred that the cenospheres have a hardness of 4 to 6 on the Mohs scale, preferably about 5.

Moreover, it is preferred that the cenospheres have an average wall thickness of 2 to 20 % of the sphere diameter, preferably 5 to 10%.

In a preferred embodiment, the cenospheres have a melting temperature of 1000-1500 °C, preferably 1150-1400°C.

In a further preferred embodiment, the cenospheres have a thermal conductivity of 0.02 to 1.0 W/m·K, preferably 0.06-0.3 W/m·K.

It is further preferred that the cenospheres have a moisture content of 0.01-1.5%, preferably 0.05-0.8 %.

Finally, it is in terms of the cenospheres preferred that they have a crush strength of 70-400 kg/cm², preferably 90-250 kg/cm².

Preferably, bulk density is measured in accordance with Omya test method (GB LTM 001), and particle size is preferably determined according to test method (GB LTM 016). Preferably, the moisture content is determined according to Omya test method GBRN LTM 007.

### II) Processes for the preparation of expandable polymer granulate

The expandable polymer granulate may be prepared by compounding in an extrusion process, alternatively by suspension polymerization, or further alternatively in a continuous mass polymerization process.

Furthermore, a masterbatch may be used in the preparation of expandable polymer granulate, the masterbatch being obtained by compounding of
i)
   a) silica and/or calcium phosphate,
   b) carbon black, and
   optionally c) nanoparticles of metal oxide, the nanoparticles having a 90% particle size of less than 100 nm (on the basis of a BET standard measurement), and preferably of less than 50 nm,
ii) styrene homo- or copolymer, and
   optionally iii) styrene monomer,
wherein the total amount of component i) in the masterbatch is 10 to 60 wt.%, and wherein component i) has been coated with one or more silanes during compounding of the masterbatch.

### IIa) Preparation of expandable polymer granulate in an extrusion process

According to the first embodiment of the second aspect, expandable polymer granulate is prepared in an extrusion process comprising the following steps:
i) feeding vinyl aromatic copolymer (and optionally vinyl aromatic homopolymer) into an extruder,
ii) adding athermanous additive or additives (such as ii)a) silica and/or calcium phosphate and ii)b) carbon black), and optionally thermal stabiliser and flame suppressant,
iii) injecting blowing agent into the melt,
iv) extruding the homogenous blend, and
v) pelletizing the blend in an underwater pelletizer, so as to obtain the granulate.

In step i), vinyl aromatic copolymer (in particular the copolymer for instance with p-tert-butylstyrene) is fed into a single or twin screw extruder. The temperature in the extruder is preferably in the range of 100-250 °C, more preferably of 150-230 °C. Preferably, the copolymer has an average molecular weight in the range of from 90 to 400 kg/mol.

In step ii), athermanous additive or additive is/are added in the form of a masterbatch or in the form of powders; the addition of the compacted form is also possible. Other additives such as nucleating agents can be added together with the athermanous fillers or with the flame retardant system (see above), thermal stabilizers and bromic acid scavengers may then be added.

In order to improve the self-extinguishing properties of the final product, cenospheres may then be added in the form of a masterbatch or in the form of powder. Cenospheres can be introduced to the process together with athermanous fillers or together with flame retardant.

It was observed that proper dispersion of additives in the polymer melt improves the cell structure uniformity of a final product (foam). More uniform structure is achieved when the dispersion of particles and flame retardant is homogenous. It was further noticed that addition of specific silanes, in particular triethoxy(phenyl)silane, to the flame retardant system improves its further dispersion in polymer matrix foam and thus influences the creation of a more uniform cell structure (see Fig. 2 below).

Because the polymeric brominated styrene-butadiene rubber is quite sensitive to the thermal degradation, a package of thermal stabilizers and bromic acid scavenger may be used to improve its thermal stability at 150 to 230 °C. It is preferably used in a total amount not higher than 2 wt.% by the weight of solid additives.

Subsequently, in step iii), the blowing agent is injected and dissolved in the copolymer melt to the last sections of the main extruder. Typically, blowing agents used are n-pentane, cyclopentane, i-pentane, combination of two of them or their mixture. In addition, halogenated aliphatic hydrocarbons or alcohols containing from 1 to 3 carbons are commonly used.

Then the mass is in step iv) transported and cooled in the "cooling extruder" from a temperature 230 °C down to 150 °C. The flame retardant with thermal stabilizers, acid scavenger (with or without nucleating agent) is added through the side arm extruder connected to the last section of the cooling unit.

Finally, in step v), the homogenous copolymer blend comprising athermanous additive (such as ii)a) silica and/or tricalcium phosphate, ii)b) carbon black), and nucleating agent, flame retardant with thermal stabilizers and acid scavenger, cenospheres and blowing agent is extruded through the static mixer, polymer melt filter, diverter valve, finally die-holes and cut by rotating knifes in a pressurized underwater pelletizer unit in order to obtain micro pellets.

Pellets are preferably pre-treated by applying a coating of a mixture of mono- and triglycerides of fatty acids and stearic acid salts and then pre-expanded by means of steam.

### IIb) Preparation of expandable polymer granulate in suspension

According to a second embodiment of the second aspect, expandable polymer granulate is prepared in an aqueous suspension polymerization process comprising the steps:
i) providing a mixture comprising
   i1) at least one suspending agent which is an inorganic acid salt,
   i2) at least one suspension stabilizer selected from the group of anionic surface active compounds and/or high molecular weight compounds (e.g. hydrophilic and/or amphiphilic polymers), and
   i3) water (preferably demineralized water),
ii) adding a vinyl aromatic monomer, sterically hindered styrene comonomer, and optionally one or more further comonomers to the mixture, and subsequently adding
   ii1) optional polymeric suspension aid,
   ii2) athermanous filler
   ii3) flame retardant
   ii4) flame suppressor, and
   ii5) at least one peroxide (or the mixture of two or more peroxides) as reaction initiator, and then polymerizing the monomer and optional comonomers in the suspension phase,
iii) continuing the polymerization (preferably until the concentration of vinyl aromatic monomer(s) is below 1000 ppm by weight, based on the weight of the polymer),
iv) adding the blowing agent during or after the polymerization step,
v) cooling, and then separating the granulate from the water.

The athermanous fillers (in particular silica, calcium phosphate, or mixtures thereof, and b) carbon black) may be added in the form of a masterbatch, they may be introduced at the beginning of the suspension polymerization process, or may be dissolved in the monomer and/or a mixture of the monomer and comonomer.

According to the present invention, athermanous additive, such as ii)a) silica and/or calcium phosphate component and ii)b) carbon black, may be introduced in step ii) or in step iii) .

The granulate is prepared using well known inorganic salts of phosphoric acid, such as types of calcium phosphate, magnesium phosphate, or a combination of salts as suspending agents. These salts may be added to the reaction mixture in a finely divided form, or as a product of an *in situ* reaction (for example, between sodium phosphate and magnesium sulphate).

The salts are supported in their suspending action by anionic surface-active compounds, such as sodium dodecylobenzene sulfonate or sodium poly(naphthalene formaldehyde) sulfonate. Those surface-active compounds can be also being prepared *in situ* using their precursors such as sodium metabisulfite and potassium persulfate. The suspension can be also stabilized by high molecular weight organic suspension stabilizer, such as polyvinyl alcohol or hydroxyethylcellulose.

To improve the stability of the suspension, up to 30 wt.% of polymer (fresh vinyl aromatic polymer or waste vinyl aromatic polymer from a previous polymerization) may be added as the optional suspension aid, preferably 5 to 15 wt.%, based on the vinyl aromatic monomer amount. It increases the viscosity of the reagent mixture (monomer with all additives), which facilitates the creation of a suspension. The same or similar effect can be achieved by mass pre-polymerization of the monomer or mixture of comonomers and additives until the suitable melt viscosity is obtained (as for 1% to 30% of polymer concentration) .

In the most preferred process, before start of the polymerization step iii), the athermanous fillers in the form of concentrated masterbatch are added to the styrene and/or its mixture with comonomer, particularly p-tert-butylstyrene. The masterbatch can contain from 10 to 60 % of athermanous fillers - carbon black, or spherically shaped amorphous silicon dioxide (silica), calcium phosphate and nano zinc oxide, pre-silanized or silanized in the masterbatch compounding process by the triethoxy(phenyl)silane to decrease its hydrophilic properties. Athermanous fillers can be combined with carbon black in one masterbatch or all can be added in the form of silanized powders. The same is referred to flame suppressors, particularly cenospheres.

The polymerization is then continued in aqueous suspension phase in the presence of the above-mentioned suspending agents, suspension stabilizers, athermanous fillers, flame retardants and suppressors, optionally at least in the presence of suspension aids.

The polymerization process is triggered by initiators. Normally, two organic peroxides are used as initiators. The first peroxide, with a half-life of one hour at 80-95°C, is used to start and run the reaction. The other, with a half-life of one hour at 105-125°C, is used during the following polymerization process continued in the higher temperature, so called high temperature cycle.

The end of the process is typically indicated by a concentration of residual vinyl monomers of below 1000 ppm by weight, based on the mass of vinyl aromatic copolymer. The vinyl aromatic copolymer which is obtained at the end of the process typically has an average molecular mass (Mw) ranging from 50 to 600 kg/mol, preferably from 150 to 450 kg/mol, most preferably 100 to 350 kg/mol. The procedure for controlling molecular mass in suspension polymerization is well known and is described in detail in Journal of Macromolecular Science, Review in Macromolecular Chemistry and Physics C31 (263) p. 215-299 (1991).

During the polymerization process, conventional additives can be added directly to the monomers, their solution with suspension aid, to the pre-polymer, or to the suspension. Additives such as flame retardant systems, nucleating agents, antistatic agents, blowing agents and colorants during the process stay in the polymer drops and are thus present in the final product. The concentrations of conventional additives are the same as for the extrusion process, as set out above.

The flame retardant systems suitable for the present invention are similar to those used in extrusion process described above. One suitable system is the combination of two types of compounds, namely a brominated aliphatic, cycloaliphatic, aromatic or polymeric compound containing at least 50 wt.% of bromine (such as hexabromocyclododecane, pentabromomonochloro-cyclohexane, or a polymeric bromine compound, specifically brominated styrene-butadiene rubber and a second compound called synergistic compound which can be e.g. initiator of peroxide - dicumyl peroxide, cumene hydroxide, and 3,4-dimethyl-3,4-diphenylbutane. The content of flame retardant system is typically in the range of 0.2 to 5.0 wt.% with respect to the total weight of vinyl aromatic polymer (weight of monomer(s) plus weight of polymer if added on the start), preferably between 1 and 3 wt.%. The ratio between bromine compound and synergistic compound is preferably in the range from 1:1 to 15:1 weight to weight, usually from 3:1 to 5:1. The flame suppressant (cenospheres) is added in the same way as athermanous fillers, in the form of concentrated masterbatch up to 60 % or in the form of powder; concentrations are the same as for extrusion process, as set out in IIa) above.

The blowing agent or agents are preferably added during the polymerization to suspension phase and are selected from aliphatic or cyclic hydrocarbons containing from 1 to 6 carbons and their derivatives. Typically are used n-pentane, cyclopentane, i-pentane, combination of two of them or their mixture. In addition, the halogenated aliphatic hydrocarbons or alcohols containing from 1 to 3 carbons are commonly used. The blowing agent or agents can also be added after the end of polymerization.

At the end of the polymerization, spherical particles of expandable styrenic copolymer are obtained as granulate, with an average diameter range of 0.3 to 2.3 mm, preferably from 0.8 to 1.6 mm. The beads can have different average molecular mass or molecular mass distribution depending on their size, but all contain used mentioned additives dispersed homogenously in the polymer matrix.

In the final step after the HTC step, the mass is cooled down to e.g. 35 °C, and the polymer granulate is separated from the water, preferably in a centrifuging process. The particles are then dried and preferably coated with a mixture of mono- and triglycerides of fatty acids and stearic acid salts.

After discharging the particles from the reactor, they are typically washed: first with water, then with non-ionic surface active agent in aqueous solution, and finally again with water; they are then desiccated and dried with hot air having a temperature in the range 35-65°C.

The final product is typically pre-treated by applying a coating (the same as for extruded granulate) and can be expanded by the same method as the extrusion product.

### IIc) Preparation of expandable granulate in continuous mass

According to a third embodiment of the third aspect, expandable polymer granulate is prepared in a continuous mass process comprising the following steps:
i) providing continuously to a mass prepolymerization reactor (or the first from a cascade reactor) a stream of:
   i1) vinyl aromatic monomer, sterically hindered styrene comonomer, and optionally one or more further comonomers,
   i2) at least one additive solution, and
   i3) optionally recycled monomer,
ii) continuing polymerization in the prepolymerization reactor or the sequence of cascade reactors,
iii) adding of athermanous fillers (such as ba) silica and/or calcium phosphate, preferably tricalcium phosphate, and bb) carbon black), with or without nano metal oxide, and optionally further additives, preferably flame suppressant,
iv) degassing the polymer,
v) feeding the polymer in molten state into the extruder, preferably directly from the polymerization plant,
vi) optionally adding a flame retardant system including synergist and thermal stabilisers,
vii) injecting the blowing agent,
viii) extruding the homogenous polymer blend, and
ix) pelletizing in an underwater pelletizer, so as to obtain the granulate.

The reactor or cascade reactor is preferably arranged horizontally. If a cascade reactor is used, then there are preferably up to 5 reactors, in particular up to 4, such as three reactors.

The continuous mass polymerization is process congruous to extrusion process but the vinyl aromatic copolymer together with athermanous fillers and flame suppressant is used in molten state and feeding extruder directly from the polymerization plant.

The mass polymerization reactor (or first from cascade reactors) is fed continuously by vinyl aromatic monomer, particularly styrene, sterically hindered styrene comonomer, for instance p-tert-butylstyrene, and optionally one or more further comonomers.

At this stage, athermanous fillers in the form of masterbatch or in the form of powders are fed into the mass polymerisation reactor, one or more additives and recycled monomer recovered from the process.

The athermanous additives (e.g. masterbatches) are preferably dissolved in the vinyl aromatic monomer (and/or the sterically hindered styrene comonomer) or before feed to the polymerization reactor.

The polymerisation reaction is initiated thermally, without addition of initiators. In order to facilitate heat collection, polymerisation is generally carried out in presence of for instance monocyclic aromatic hydrocarbon.

The prepolymerised mass from the pre-polymerisation reactor is pumped through the sequence of several horizontal reactors, and the polymerisation reaction is subsequently continued.

At the end of the mass polymerization stage, the rest of any unpolymerized monomer is removed by degassing of the melt.

A vinyl aromatic copolymer in molten state, produced in mass polymerization and containing athermanous fillers (e.g. carbon black with or without nano metal oxide, and silica or/and calcium phosphate, and cenospheres as flame suppressant) are fed into the extruder at the temperature in the range of from 100 to 250 °C, preferably from 150 to 230 °C. In the next stage, the flame retardant system and nucleating agent is fed to the copolymer melt. A combination of two types of flame retarding compounds can be used, namely a brominated aliphatic, cycloaliphatic, aromatic or polymeric compound containing at least 50 wt.% of bromine, and a second compound called synergistic compound, which can be bicumyl (2,3-dimethyl-2,3-diphenylbutane) or 2-hydroperoxy-2-methylpropane.

The concentrations of additives are the same as for the extrusion process, as set out above.

In the following step, the blowing agent is injected into the molten polymer blend and mixed.

The blowing agent or agents are the same as for the suspension process, i.e. selected from aliphatic or cyclic hydrocarbons containing from 1 to 6 carbons and their derivatives.

The copolymer with all additives and blowing agent is subsequently extruded to give expandable beads.

The homogenous copolymer blend comprising carbon black, silica, cenospheres, additives and blowing agent is pumped to the die, where it is extruded through a number of cylindrical die-holes with 0.5-0.8 mm of diameter, immediately cooled by a water stream and cut with a set of rotating knives in pressurized underwater pelletizer, to receive micropellets (granulate).

The beads are transported by water, washed, drained off and fractioned. The final product is pre-treated in the same way as it is in the suspension and extrusion processes.

### III) Expandable polymer granulate

In a third aspect, the invention relates to expandable copolymer granulate as prepared by the IIa) extrusion or IIb) suspension process or IIc) in continuous mass polymerization.

Preferably, the parameters relating to the silica, calcium phosphate, carbon black, nano metal oxides, cenospheres and furthermore the use of styrene copolymer with p-tert-butylstyrene, set out above in relation to the process equally apply to the expandable polymer.

The expandable copolymer further comprises one or more (athermanous) additives selected from inorganic powder materials, graphite, petroleum coke, graphitized carbon black, graphite oxides, graphene, and mixtures thereof, preferably silica, carbon black, calcium phosphate, and graphite.

### IV) Expanded polymer foam

In a fourth aspect, the invention relates to an expanded copolymer composition comprising
a. vinyl aromatic copolymer containing styrene monomer and p-tert-butylstyrene comonomer and
b) one or more athermanous additives,
preferably an expanded copolymer foam, as obtained by expansion of the above-mentioned granulate.

The foam in accordance with the invention typically has a density of 10 to 30 kg/cm³, and a thermal conductivity of 25 to 35 mW/K-m.

It is noted that, unlike the properties of the starting materials, the properties of additives as contained in the granulate or foam are notoriously difficult to determine. It is often considered more appropriate to characterize the additives in granulate and foam with reference to the properties of the additives as initially used.

The advantages of the present invention become apparent from the following examples. Unless indicated otherwise, all percentages are given by weight.

Moreover, whenever reference is made in the description to an amount of additive "by weight of polymer or copolymer", this refers to the amount of the additive by weight of (co)polymer component inclusive of (solid and, if any, liquid) additives.

### Examples

In reference to the processes for the preparation of expandable polymers granulate by the extrusion process, the following examples were performed (Examples 8a, 16, and 22 involve the claimed addition of para-tert. butyl styrene. The further examples are comparative):

### Example 1

In the first example, the general purpose polystyrene - Synthos PS 585X, type CSX910 carbon black from Cabot Corporation with a BET surface of 73.6 m²/g and a sulphur content of 4000 ppm was used in concentration of 5 wt.%. The Synthos PS 585X and CSX910 were dosed to the main extruder together with spherically-shaped amorphous silicon dioxide from ELKEM in an amount of 1 wt.% and tricalcium phosphate (Expandia R) from Innophos in amount of 2 wt.% (both combined with carbon black in one masterbatch). In example 3a, the nano zinc oxide in combination with CSX910 (compounded in one masterbach) was used to prove its positive influence on the further "lambda" decrease. Additionally styrene copolymer with 40 wt.% concentrated para-tert-butylstyrene was added in example 8a to improve glass transition temperature of the polymer matrix. The polymeric flame retardant - (brominated styrene/butadiene rubber) in the concentration of 2 wt.%, together with thermal stabilizers: Irganox 1010 (0.1 wt.%), Irgafos 126 (0.1 wt.%), bromic acid scavenger: Epon 164 from Momentive (0.2 wt.%) and nucleating agent: Polywax 2000 (0.3 wt.%) were fed as powders mixture to the side arm extruder connected to the last section of "cooling extruder". The flame suppressor (cenospheres) was added together with athermanous fillers in the form of masterbach, in examples 2, 3 and 3a. In examples 8 and 8a the silane was used for comparison to improve additives dispersion, thus cell structure uniformity. The pentane and isopentane mixture 85/15% in the concentration of 5.5 wt.% were fed to the last section of the main extruder.

### Example 2

The extrusion process of Example 1 was used with the following components:
- General purpose polystyrene Synthos PS 585X with MFI 8 g/10 min.
- Carbon black CSX910: 5 wt.%
- Spherically-shaped amorphous silicon dioxide: 1 wt.%
- Tricalcium phosphate: 2 wt%
- Cenospheres: 3 wt.%
- Polymeric flame retardant (brominated styrene/butadiene rubber) : 2 wt %
- Pentane / isopentane mixture (85/15 %): 5.5 wt.%
- Nucleating agent (Polywax 2000): 0.3 %

### Example 3

The following components were used:
- General purpose polystyrene Synthos PS 585X with MFI 8 g/10 min.
- Carbon black CSX910: 5 wt.%
- Spherically-shaped amorphous silicon dioxide: 1 wt.%
- Tricalcium phosphate: 2 wt%
- Cenospheres: 3 wt.%
- Polymeric flame retardant (brominated styrene/butadiene rubber) : 2.0 w%
- Bicumyl: 0.2 wt.%
- Pentane / isopentane mixture (85/15 %): 5.5 wt.%
- Nucleating agent (Polywax 2000): 0.3 %

### Example 3a

The following components were used:
- General purpose polystyrene Synthos PS 585X with MFI 8 g/10 min.
- Carbon black CSX910/Nano ZnO (5:1): 6 wt.%
- Spherically-shaped amorphous silicon dioxide: 1 wt.%
- Tricalcium phosphate: 2 wt%
- Cenospheres: 3 wt.%
- Polymeric flame retardant (brominated styrene/butadiene rubber) : 2.0 w%
- Bicumyl: 0.2 wt.%
- Pentane / isopentane mixture (85/15 %): 5.5 wt.%
- Nucleating agent (Polywax 2000): 0.3 %

### Example 4

The following components were used:
- General purpose polystyrene Synthos PS 585X with MFI 8 g/10 min.
- Carbon black CSX910: 5 wt.%
- Polymeric flame retardant (brominated styrene/butadiene rubber) : 2.0 w%
- Bicumyl: 0.2 wt.%
- Pentane / isopentane mixture (85/15 %): 5.5 wt.%
- Nucleating agent (Polywax 2000): 0.3 %

### Example 5

The following components were used:
- General purpose polystyrene Synthos PS 585X with MFI 8 g/10 min.
- Carbon black CSX910: 6 wt.%
- Polymeric flame retardant (brominated styrene/butadiene rubber) : 2.0 w%
- Bicumyl: 0.2 wt.%
- Pentane / isopentane mixture (85/15 %): 5.5 wt.%
- Nucleating agent (Polywax 2000): 0.3 %

### Example 6

- General purpose polystyrene Synthos PS 585X with MFI 8 g/10 min.
- Carbon black CSX910: 7 wt.%
- Polymeric flame retardant (brominated styrene/butadiene rubber) : 2.0 w%
- Bicumyl: 0.2 wt.%
- Pentane / isopentane mixture (85/15 %): 5.5 wt.%
- Nucleating agent (Polywax 2000): 0.3 %

### Example 7

- General purpose polystyrene Synthos PS 585X with MFI 8 g/10 min.
- Carbon black CSX910: 8 wt.%
- Polymeric flame retardant (brominated styrene/butadiene rubber) : 2.0 w%
- Bicumyl: 0.2 wt.%
- Pentane / isopentane mixture (85/15 %): 5.5 wt.%
- Nucleating agent (Polywax 2000): 0.3 %

### Example 8

The following components were used:
- General purpose polystyrene Synthos PS 585X with MFI 8 g/10 min.
- Carbon black CSX910: 5 wt.%
- Spherically-shaped amorphous silicon dioxide: 1 wt.%
- Tricalcium phosphate: 2 wt%
- Polymeric flame retardant (brominated styrene/butadiene rubber) : 2.0 w%
- Silane (triethoxy(phenyl)silane): 0.01 wt.%
- Bicumyl: 0.2 wt.%
- Pentane / isopentane mixture (85/15 %): 5.5 wt.%
- Nucleating agent (Polywax 2000): 0.3 wt.%

### Example 8a

The following components were used:
- General purpose polystyrene Synthos PS 585X with MFI 8 g/10 min.
- General purpose polystyrene Synthos PS 585X modified by comonomer in content of 40 %: 15 wt% (i.e 6 % of p-TBS in the total mixture).
- Carbon black CSX910: 5 wt.%
- Spherically-shaped amorphous silicon dioxide: 1 wt.%
- Tricalcium phosphate: 2 wt%
- Polymeric flame retardant (brominated styrene/butadiene rubber) : 2.0 w%
- Silane (triethoxy(phenyl)silane): 0.01 wt.%
- Bicumyl: 0.2 wt.%
- Pentane / isopentane mixture (85/15 %): 5.5 wt.%
- Nucleating agent (Polywax 2000): 0.3 wt.%

**Table 1. Examples summary.**

| Components (wt.%) | Ex. 1 | Ex. 2 | Ex. 3 | Ex. 3a | Ex. 4 | Ex. 5 | Ex. 6 | Ex. 7 | Ex. 8 | Ex. 8a |
|---|---|---|---|---|---|---|---|---|---|---|
| GP585X with 40 % of p-TBS | | | | | | | | | | 15 (6% p-TBS in composition) |
| CSX910 | 5 | 5 | 5 | - | 5 | 6 | 7 | 8 | 5 | 5 |
| CSX910/NanoZnO (5:1) | - | - | - | 6 | - | - | - | - | - | - |
| Silica | 1 | 1 | 1 | 1 | - | - | - | - | 1 | 1 |
| Tricalcium phosphate | 2 | 2 | 2 | 2 | - | - | - | - | 2 | 2 |
| Cenospheres | - | 3 | 3 | 3 | - | - | - | - | - | - |
| Flame retardant | 2 | 2 | 2 | 2 | 2 | 2 | 2 | 2 | 2 | 2 |
| Silane | - | - | - | - | - | - | - | - | 0.01 | 0.01 |
| Bicumyl | 0.2 | - | 0.2 | 0.2 | 0.2 | 0.2 | 0.2 | 0.2 | 0.2 | 0.2 |
| Polywax 2000 | 0.3 | 0.3 | 0.3 | 0.3 | 0.3 | 0.3 | 0.3 | 0.3 | 0.3 | 0.3 |
| Pentane/Isopentane | 5.5 | 5.5 | 5.5 | 5.5 | 5.5 | 5.5 | 5.5 | 5.5 | 5.5 | 5.5 |

**Table 2. Final product parameters at ca. 18.5 g/l**

| Parameter | Ex. 1 | Ex. 2 | Ex. 3 | Ex. 3a | Ex. 4 | Ex. 5 | Ex. 6 | Ex. 7 | Ex. 8 | Ex. 8a |
|---|---|---|---|---|---|---|---|---|---|---|
| Glass transition (°C)/ASTM D7426/ | 103 | 103 | 104 | 103 | 101 | 100 | 100 | 98 | 103 | 108 |
| Thermal conductivity (mW/m·K) | 30.1 | 30.3 | 30.3 | 29.4 | 30.8 | 30.6 | 30.2 | 29.8 | 30.0 | 30.1 |
| Flammability /EN 13163/ | + | + | + | + | + | - | - | - | + | + |
| Flammability /DIN 4102 B1/B2/ | B2 | B2 | B1 | B1 | - | - | - | - | B2 | B2 |
| Compressive stress at 10% def. (MPa) /EN 13163/ | 80 | 80 | 79 | 81 | 71 | 67 | 62 | 61 | 82 | 95 |
| Bending strength (MPa) /EN 13163/ | 195 | 191 | 190 | 191 | 190 | 185 | 169 | 152 | 189 | 205 |

| | | | | | | | | | | |
|---|---|---|---|---|---|---|---|---|---|---|
| Passed (+ or B2 or B1); Not passed (-) | | | | | | | | | | |

### Example 9

In this and the following examples, the method of production was changed to suspension polymerization. The same carbon black CSX910 from Cabot Corporation in the concentration 5 wt.% was used in masterbatch form, based on general purpose polystyrene-Synthos PS 585X. Comonomer (para-tert-butylstyrene, p-TBS) was used in the mixture of styrene in example 16. In examples 11-16 with additional fillers: tricalcium phosphate, cenospheres, silica and nano zinc oxide were jointly compounded with carbon black, and coated by polymeric silane first to improve its affinity to the organic phase (monomer). The polymeric flame retardant system - (brominated styrene/butadiene rubber) in the concentration of 2.5 wt.% together with dicumyl peroxide in the concentration 1.0 wt.%, and nucleating agent: Polywax 1000 (0.1 wt.%) were added in pure powder form. Pentane and isopentane mixture (85/15) in a concentration of 6.0 wt.% was dosed to the closed reactor during the second stage of polymerization.

### Example 10

The same process was used as in Example 9 and the following components:
- Carbon black CSX910: 6 wt.%
- polymeric flame retardant (brominated styrene/butadiene rubber) : 2.5 wt.%
- Dicumyl peroxide: 1.0 wt.%
- Pentane / isopentane mixture (85/15 %): 6.0 wt.%
- Nucleating agent (Polywax 1000): 0.1 %

### Example 11

The same process was used and the following components:
- Carbon black CSX910: 5 wt.%
- Spherically-shaped amorphous silicon dioxide pre-coated with oligomeric silane (Dynasylan 6598): 1 wt.%
- Tricalcium phosphate pre-coated with oligomeric silane (Dynasylan 6598): 1 wt%
- Polymeric flame retardant (brominated styrene/butadiene rubber) : 2.5 wt.%
- Dicumyl peroxide: 1.0 wt.%
- Pentane / isopentane mixture (85/15 %): 6.0 wt.%
- Nucleating agent (Polywax 1000): 0.1 %

### Example 12

The same process was used and the following components:
- Carbon black CSX910: 5 wt.%
- Cenospheres pre-coated with oligomeric silane (Dynasylan 6598): 1 wt.%
- Polymeric flame retardant (brominated styrene/butadiene rubber) : 2.5 wt.%
- Dicumyl peroxide: 1.0 wt.%
- Pentane / isopentane mixture (85/15 %): 6.0 wt.%
- Nucleating agent (Polywax 1000): 0.1 %

### Example 13

The same process was used and the following components:
- Carbon black CSX910: 5 wt.%
- Spherically-shaped amorphous silicon dioxide pre-coated with oligomeric silane (Dynasylan 6598): 1 wt.%
- Cenospheres pre-coated with oligomeric silane (Dynasylan 6598): 1 wt.%
- Tricalcium phosphate pre-coated with oligomeric silane (Dynasylan 6598): 1 wt%
- Polymeric flame retardant (brominated styrene/butadiene rubber) : 2.5 wt.%
- Dicumyl peroxide: 1.0 wt.%
- Pentane / isopentane mixture (85/15 %): 6.0 wt.%
- Nucleating agent (Polywax 1000): 0.1 %

### Example 13a

The same process was used and the following components:
- Carbon black CSX910/Nano ZnO (5:1): 6 wt.%
- Spherically-shaped amorphous silicon dioxide pre-coated with oligomeric silane (Dynasylan 6598): 1 wt.%
- Cenospheres pre-coated with oligomeric silane (Dynasylan 6598): 1 wt.%
- Tricalcium phosphate pre-coated with oligomeric silane (Dynasylan 6598): 1 wt%
- Polymeric flame retardant (brominated styrene/butadiene rubber) : 2.5 wt.%
- Dicumyl peroxide: 1.0 wt.%
- Pentane / isopentane mixture (85/15 %): 6.0 wt.%
- Nucleating agent (Polywax 1000): 0.1 %

### Example 14

The same process was used and the following components:
- Carbon black CSX910: 5 wt.%
- Spherically-shaped amorphous silicon dioxide pre-coated with oligomeric silane (Dynasylan 6598): 1 wt.%
- Tricalcium phosphate pre-coated with oligomeric silane (Dynasylan 6598): 1 wt%
- Cenospheres pre-coated with oligomeric silane (Dynasylan 6598): 2 wt.%
- Polymeric flame retardant (brominated styrene/butadiene rubber) : 2.0 wt.%
- Dicumyl peroxide: 0.8 wt.%
- Pentane / isopentane mixture (85/15 %): 6.0 wt.%
- Nucleating agent (Polywax 1000): 0.2 %

### Example 15

- Carbon black CSX910: 5 wt.%
- Spherically-shaped amorphous silicon dioxide pre-coated with oligomeric silane (Dynasylan 6598): 1 wt.%
- Cenospheres pre-coated with oligomeric silane (Dynasylan 6598): 1 wt.%
- Polymeric flame retardant (brominated styrene/butadiene rubber) : 2.0 w%
- Dicumyl peroxide: 0.8 wt.%
- Pentane / isopentane mixture (85/15 %): 6.0 wt.%
- Nucleating agent (Polywax 1000): 0.1 %

### Example 16

- para-tert-butylstyrene: 2 wt%
- Carbon black CSX910: 5 wt.%
- Spherically-shaped amorphous silicon dioxide pre-coated with oligomeric silane (Dynasylan 6598): 1 wt.%
- Cenospheres pre-coated with oligomeric silane (Dynasylan 6598): 1 wt.%
- Polymeric flame retardant (brominated styrene/butadiene rubber) : 2.0 w%
- Dicumyl peroxide: 0.8 wt.%
- Pentane / isopentane mixture (85/15 %): 6.0 wt.%
- Nucleating agent (Polywax 1000): 0.1 %

**Table 3. Examples summary.**

| Components (wt.%) | Ex. 9 | Ex. 10 | Ex. 11 | Ex. 12 | Ex. 13 | Ex. 13a | Ex. 14 | Ex. 15 | Ex. 16 |
|---|---|---|---|---|---|---|---|---|---|
| p-TBS | | | | | | | | | 2 |
| CSX910 | 5 | 6 | 5 | 5 | 5 | - | 5 | 5 | 5 |
| CSX910/NanoZnO (5:1) | - | - | - | - | - | 6 | - | - | - |
| Silica | - | - | 1 | - | 1 | 1 | 1 | 1 | 1 |
| Cenospheres | - | - | - | 1 | 1 | 1 | 2 | 1 | 1 |
| Tricalcium phosphate | | | 1 | | 1 | 1 | 1 | | |
| Flame retardant | 2.5 | 2.5 | 2.5 | 2.5 | 2.5 | 2.5 | 2 | 2 | 2 |
| Dicumyl peroxide | 1.0 | 1.0 | 1.0 | 1.0 | 1.0 | 1.0 | 0.8 | 0.2 | 0.2 |
| Polywax 1000 | 0.1 | 0.1 | 0.1 | 0.1 | 0.1 | 0.1 | 0.2 | 0.1 | 0.1 |
| Pentane/Isopentane | 6.0 | 6.0 | 6.0 | 6.0 | 6.0 | 6.0 | 5.5 | 5.5 | 5.5 |

**Table 4.Final product parameters at ca. 19.5 g/l**

| **Parameter** | **Ex. 9** | **Ex. 10** | **Ex. 11** | **Ex. 12** | **Ex. 13** | **Ex. 13a** | **Ex. 14** | **Ex. 15** | **Ex. 16** |
|---|---|---|---|---|---|---|---|---|---|
| Glass transition (°C)/ASTM D7426/ | 103 | 101 | 102 | 103 | 102 | 103 | 102 | 103 | 106 |
| Thermal conductivity (mW/m·K) | 30.8 | 30.3 | 30.0 | 30.7 | 30.1 | 29.5 | 30.1 | 30.0 | 29.9 |
| Flammability /EN 13163/ | + | + | + | + | + | + | + | + | + |
| Flammability /DIN 4102 B1/B2/ | B2 | - | B2 | B2 | B1 | B1 | B1 | B2 | B2 |
| Compressive stress at 10% def. (MPa) / EN 13163/ | 68 | 62 | 74 | 69 | 74 | 78 | 76 | 72 | 86 |
| Bending strength (MPa) | 174 | 168 | 185 | 182 | 186 | 187 | 183 | 180 | 200 |

| | | | | | | | | | |
|---|---|---|---|---|---|---|---|---|---|
| Passed (+ or B2 or B1)); Not passed (-) | | | | | | | | | |

### Example 17

In this example, the method of styrene polymerization was changed to continuous mass in three reactors cascade. The polymerization of styrene was initiated by heating. The same carbon black CSX910 from Cabot Corporation in the concentration 5 wt.% was used in powder form. The polymeric flame retardant system - (brominated styrene/butadiene rubber) in the concentration of 2.5 wt.% together with bicumyl peroxide in a concentration 0.5 wt.%, and nucleating agent: Polywax 2000 (0.2 wt.%) were added in pure powder form to the extruding raw polystyrene just after degassing of polymer. Pentane and isopentane mixture 85/15 % in the concentration 5.5 wt.% is dosed to extruder. The granulate form was obtained by underwater pelletizing. In examples 18, 19, 21, 21a, 22, the minerals: tricalcium phosphate, cenospheres, silica were coated by silane and jointly compounded to improve their dispersion in the polymer. The comonomer (p-TBS) was added in the last example (Ex. 22) to increase the polymer glass transition.

### Example 18

The method was changed again, namely one reactor for continuous mass polymerization was used. The polymerization of pure styrene was initiated by benzoyl peroxide 0.12 %. The carbon black was added as masterbatch based on Synthos PS 585X.

The components used were as follows:
- Carbon black CSX910: 5 wt.%
- Spherically-shaped amorphous silicon dioxide pre-coated with oligomeric silane (Dynasylan 6598): 1 wt.%
- Polymeric flame retardant (brominated styrene/butadiene rubber) : 2.5 wt.%
- Bicumyl: 0.5 wt.%
- Pentane / isopentane mixture (85/15 %): 5.5 wt.%
- Nucleating agent (Polywax 2000): 0.2 %.

### Example 19

The same process as in example 17 was used, with the following components:
- Carbon black CSX910: 5 wt.%
- Spherically-shaped amorphous silicon dioxide pre-coated with oligomeric silane (Dynasylan 6598): 1 wt.%
- Tricalcium phosphate coated by Dynasylan 6598: 2 wt%
- Polymeric flame retardant (brominated styrene/butadiene rubber) : 2.5 wt.%
- Bicumyl: 0.5 wt.%
- Pentane / isopentane mixture (85/15 %): 5.5 wt.%
- Nucleating agent (Polywax 2000): 0.2 %

### Example 20

The same process as in example 17 was used, with the following components:
- Carbon black CSX910: 5 wt.%
- Cenospheres pre-coated with oligomeric silane (Dynasylan 6598): 3 wt.%
- Polymeric flame retardant (brominated styrene/butadiene rubber) : 2.0 wt.%
- Bicumyl: 0.4 wt.%
- Pentane / isopentane mixture (85/15 %): 5.5 wt.%
- Nucleating agent (Polywax 2000): 0.2 %

### Example 21

The same process as in Example 17 was used and the following components:
- Carbon black CSX910: 5 wt.%
- Spherically-shaped amorphous silicon dioxide pre-coated with oligomeric silane (Dynasylan 6598): 1 wt.%
- Tricalcium phosphate coated by Dynasylan 6598: 2 wt%
- Cenospheres pre-coated with oligomeric silane (Dynasylan 6598): 4 wt.%
- Polymeric flame retardant (brominated styrene/butadiene rubber) : 1.5 wt.%
- Bicumyl: 0.3 wt.%
- Pentane / isopentane mixture (85/15 %): 5.5 wt.%
- Nucleating agent (Polywax 2000): 0.2 %

### Example 21a

The same process (Ex 17) was used and the following components:
- Carbon black CSX910/Nano ZnO (5:1): 6 wt.%
- Spherically-shaped amorphous silicon dioxide pre-coated with oligomeric silane (Dynasylan 6598): 1 wt.%
- Tricalcium phosphate coated by Dynasylan 6598: 2 wt%
- Cenospheres pre-coated with oligomeric silane (Dynasylan 6598): 4 wt.%
- Polymeric flame retardant (brominated styrene/butadiene rubber) : 1.5 wt.%
- Bicumyl peroxide: 0.3 wt.%
- Pentane / isopentane mixture (85/15 %): 5.5 wt.%
- Nucleating agent (Polywax 2000): 0.2 %

### Example 22

The same process (Ex 17) was used and the following components:
- para-tert-butylstyrene: 5 wt%
- Carbon black CSX910: 3 wt.%
- Spherically-shaped amorphous silicon dioxide pre-coated with oligomeric silane (Dynasylan 6598): 1 wt.%
- Tricalcium phosphate coated by Dynasylan 6598: 2 wt%
- Cenospheres pre-coated with oligomeric silane (Dynasylan 6598): 3 wt.%
- Polymeric flame retardant (brominated styrene/butadiene rubber) : 2.0 wt.%
- Dicumyl peroxide: 0.4 wt.%
- Pentane / isopentane mixture (85/15 %): 5.5 wt.%
- Nucleating agent (Polywax 2000): 0.3 %

**Table 5. Examples summary.**

| **Components (wt.%)** | **Ex. 17** | **Ex. 18** | **Ex. 19** | **Ex. 20** | **Ex. 21** | **Ex. 21a** | **Ex. 22** |
|---|---|---|---|---|---|---|---|
| p-TBS | | | | | | | 5 |
| CSX910 | 5 | 5 | 5 | 5 | 5 | - | 3 |
| CSX910/Nano ZnO (5:1) | - | - | - | - | - | 6 | - |
| Silica | - | 1 | 1 | - | 1 | 1 | 1 |
| Tricalcium phosphate | | | 2 | | 2 | 2 | 2 |
| Cenospheres | - | - | - | 3 | 4 | 4 | 5 |
| Flame retardant | 2.5 | 2.5 | 2.5 | 2.0 | 1.5 | 1.5 | 1.0 |
| Bicumyl | 0.5 | 0.5 | 0.5 | 0.4 | 0.3 | 0.3 | 0.2 |
| Polywax 2000 | 0.2 | 0.2 | 0.2 | 0.2 | 0.2 | 0.2 | 0.3 |
| Pentane/Isopentane | 5.5 | 5.5 | 6.0 | 6.0 | 6.0 | 6.0 | 5.5 |

**Table 6. Final product parameters at ca. 20.0 g/l**

| **Parameter** | **Ex. 17** | **Ex. 18** | **Ex. 19** | **Ex. 20** | **Ex. 21** | **Ex. 21a** | **Ex. 22** |
|---|---|---|---|---|---|---|---|
| Glass transition (°C)/ASTM D7426/ | 101 | 102 | 103 | 100 | 103 | 103 | 109 |
| Thermal conductivity (mW/m·K) | 30.7 | 30.0 | 29.7 | 30.4 | 29.8 | 29.2 | 31.0 |
| Flammability (EN 13163) | + | + | + | + | + | + | + |
| Flammability (DIN 4102 B1/B2) | B2 | B2 | B2 | B1 | B1 | B1 | B1 |
| Compressive stress at 10% def. (MPa) | 67 | 66 | 71 | 63 | 70 | 69 | 92 |
| Bending strength (MPa) | 172 | 171 | 179 | 176 | 179 | 180 | 208 |

| | | | | | | | |
|---|---|---|---|---|---|---|---|
| Passed (+ or B2 or B1); Not passed (-) | | | | | | | |

## Claims

1. Use of p-tert-butylstyrene comonomer for increasing the glass transition temperature (Tg) of expanded vinyl aromatic polymer, wherein said polymer
i) is prepared from styrene monomer and
ii) contains one or more athermanous additives.

2. The use according to claim 1, wherein the athermanous additive is selected from inorganic powder materials, graphite, petroleum coke, graphitized carbon black, graphite oxides, graphene, and mixtures thereof.

3. The use according to claim 2, wherein the athermanous additive is selected from silica, carbon black, calcium phosphate, and mixtures thereof.

4. The use according to claim 3, wherein component ii) is a combination of
a) a mineral component containing amorphous silica, calcium phosphate, or mixtures thereof, and
b) carbon black.

5. The use according to claim 4, wherein
a1) the silica is amorphous and has
- a BET surface, as measured according to the description, of 3 to 80 m²/g,
- a particle size distribution, as measured according to the description, within the range of from 3 nm to 1,000 nm, and
the silica, if used, is present in an amount of 0.1 to less than 2 wt.%, based on the weight of the copolymer,
a2) the calcium phosphate has a particle size, as measured by laser diffraction, of 0.1 µm to 20 µm, and the calcium phosphate, if used, is present in an amount of 0.1 to 10 wt.%, based on the weight of copolymer, and
b) the carbon black has
- a BET surface, as measured according to ASTM 6556, of more than 40 up to 250 m²/g, and
- a sulphur content in the range of from 50 to 20,000 ppm, as measured according to ASTM D 1619, and
the carbon black is present in an amount of 0.1 to 12 wt.%, based on the weight of the copolymer.

6. The use according to any of the preceding claims wherein the vinyl aromatic copolymer is comprised of 1 to 99 wt.% of styrene monomer and 99 to 1 wt.% of p-tert-butylstyrene comonomer (based on the total amount of monomer).

7. The use according to claim 6, wherein the vinyl aromatic copolymer is comprised of 50 to 98 wt.% of styrene monomer and 50 to 2 wt.% of p-tert-butylstyrene comonomer (based on the total amount of monomer).

8. The use according to claim 7, wherein the vinyl aromatic copolymer is comprised of 75 to 95 wt.% of styrene monomer and 25 to 5 wt.% of p-tert-butylstyrene comonomer (based on the total amount of monomer).

9. Extrusion process for preparing expandable polymer granulate comprising the following steps:
i) feeding vinyl aromatic copolymer containing styrene monomer and p-tert-butylstyrene comonomer (and optionally vinyl aromatic homopolymer) into an extruder,
ii) adding athermanous additive or additives, and optionally thermal stabiliser and flame suppressant,
iii) injecting blowing agent into the melt,
iv) extruding the homogenous blend, and
v) pelletizing the blend in an underwater pelletizer, so as to obtain the granulate.

10. Aqueous suspension polymerization process for preparing expandable polymer granulate comprising the steps:
i) providing a mixture comprising
i1) at least one suspending agent which is an inorganic acid salt,
i2) at least one suspension stabilizer selected from the group of anionic surface active compounds and/or high molecular weight compounds, and
i3) water,
ii) adding styrene monomer, p-tert-butylstyrene comonomer, and optionally one or more further comonomers to the mixture, and subsequently adding
ii1) optional polymeric suspension aid,
ii2) athermanous filler
ii3) flame retardant
ii4) flame suppressor, and
ii5) at least one peroxide as reaction initiator, and then polymerizing the monomer and optional comonomers in the suspension phase,
iii) continuing the polymerization,
iv) adding the blowing agent during or after the polymerization step,
v) cooling, and then separating the granulate from the water.

11. Continuous mass process for preparing expandable polymer granulate comprising the following steps:
i) providing continuously to a mass prepolymerization reactor (or the first from a cascade reactor) a stream of:
i1) styrene monomer, p-tert-butylstyrene comonomer, and optionally one or more further comonomers,
i2) at least one additive solution, and
i3) optionally recycled monomer,
ii) continuing polymerization in the prepolymerization reactor or the sequence of cascade reactors,
iii) adding of athermanous fillers, and optionally further additives,
iv) degassing the polymer,
v) feeding the polymer in molten state into the extruder,
vi) optionally adding a flame retardant system including synergist and thermal stabilisers,
vii) injecting the blowing agent,
viii) extruding the homogenous polymer blend, and
ix) pelletizing in an underwater pelletizer, so as to obtain the granulate.

12. Expandable copolymer granulate obtainable in the process of any of claims 9 to 11.

13. Expanded copolymer composition comprising
a. vinyl aromatic copolymer containing styrene monomer and p-tert-butylstyrene comonomer and
b. one or more athermanous additives;
preferably wherein the vinyl aromatic copolymer is comprised of 1 to 99 wt.% of styrene monomer and 99 to 1 wt.% of p-tert-butylstyrene comonomer (based on the total amount of monomer).

14. The expanded copolymer composition of claim 13, wherein the expanded copolymer composition is obtainable from the expandable copolymer granulate of claim 12.

## Patentansprüche

1. Verwendung von p-tert-Butylstyrol-Comonomer zur Erhöhung der Glasübergangstemperatur (Tg) von expandiertem vinylaromatischen Polymer, wobei das Polymer
i) hergestellt ist aus Styrolmonomer und
ii) ein oder mehrere athermane Additive enthält.

2. Verwendung nach Anspruch 1, wobei das athermane Additiv ausgewählt ist aus anorganischen Pulvermaterialien, Graphit, Petrolkoks, graphitiertem Ruß, Graphitoxiden, Graphen und Mischungen davon.

3. Verwendung nach Anspruch 2, wobei das athermane Additiv ausgewählt ist aus Siliciumdioxid, Ruß, Calciumphosphat und Mischungen davon.

4. Verwendung nach Anspruch 3, wobei Komponente ii) eine Kombination von
a) einer Mineralkomponente, die amorphes Siliciumdioxid, Calciumphosphat oder Mischungen davon enthält und
b) Ruß ist.

5. Verwendung nach Anspruch 4, wobei
a1) das Siliciumdioxid amorph ist und
- eine BET-Oberfläche, bestimmt gemäß der Beschreibung, von 3 bis 80 m²/g und
- eine Teilchengrößenverteilung besitzt, bestimmt gemäß der Beschreibung, im Bereich von 3 nm bis 1000 nm, und
das Siliciumdioxid, wenn es verwendet wird, in einer Menge von 0,1 bis weniger als 2 Gew.-% vorhanden ist, bezogen auf das Gewicht des Copolymers,
a2) das Calciumphosphat eine Teilchengröße, bestimmt durch Laserstreuung, von 0,1 µm bis 20 µm besitzt, und das Calciumphosphat, wenn es verwendet wird, in einer Menge von 0,1 bis 10 Gew.-% vorhanden ist, bezogen auf das Gewicht des Copolymers, und
b) der Ruß
- eine BET-Oberfläche, bestimmt gemäß ASTM 6556, von mehr als 40 bis 250 m²/g und
- einen Schwefelgehalt im Bereich von 50 bis 20.000 ppm besitzt, bestimmt gemäß ASTM D 1619, und
der Ruß in einer Menge von 0,1 bis 12 Gew.-% vorhanden ist, bezogen auf das Gewicht des Copolymers.

6. Verwendung nach einem der vorhergehenden Ansprüche, wobei das vinylaromatische Copolymer 1 bis 99 Gew.-% Styrolmonomer und 99 bis 1 Gew.-% p-tert-Butylstyrol-Comonomer (bezogen auf die gesamte Menge Monomer) aufweist.

7. Verwendung nach Anspruch 6, wobei das vinylaromatische Copolymer 50 bis 98 Gew.-% Styrolmonomer und 50 bis 2 Gew.-% p-tert-Butylstyrol-Comonomer (bezogen auf das Gesamtgewicht Monomer) aufweist.

8. Verwendung nach Anspruch 7, wobei das vinylaromatische Copolymer 75 bis 95 Gew.-% Styrolmonomer und 25 bis 5 Gew.-% p-tert-Butylstyrol-Comonomer (bezogen auf das Gesamtgewicht Monomer) aufweist.

9. Extrusionsverfahren zur Herstellung von expandierbarem Polymergranulat, mit den folgenden Schritten:
i) Einspeisen von vinylaromatischem Copolymer, das Styrolmonomer und p-tert-Butylstyrol-Comonomer (und gegebenenfalls vinylaromatisches Homopolymer) enthält, in einen Extruder,
ii) Zugabe von athermanem Additiv oder athermanen Additiven, und gegebenenfalls thermischem Stabilisator und Flammunterdrückungsmittel,
iii) Zugeben von Treibmittel in die Schmelze,
iv) Extrudieren des homogenen Gemischs und
v) Pelletieren des Gemischs in einer Unterwasser-Pelletiervorrichtung, um so das Granulat zu erhalten.

10. Polymerisationsverfahren in wässriger Suspension von expandierbarem Polymergranulat mit den Schritten:
i) Bereitstellen einer Mischung, die umfasst
i1) mindestens ein Suspendiermittel, das ein Salz von anorganischer Säure ist,
i2) mindestens einen Suspensionsstabilisator, der ausgewählt ist aus der Gruppe von anionischen oberflächenaktiven Verbindungen und/oder Verbindungen mit hohem Molekulargewicht, und
i3) Wasser,
ii) Zugabe von Styrolmonomer, p-tert-Butylstyrol-Comonomer und gegebenenfalls einem oder mehreren weiteren Comonomeren zu der Mischung, und nachfolgend Zugabe von
ii1) optionalem polymeren Suspensionshilfsmittel,
ii2) athermanem Füllstoff,
ii3) Flammverzögerer,
ii4) Flammunterdrückungsmittel und
ii5) mindestens einem Peroxid als Reaktionsinitiator, und dann Polymerisieren des Monomers und gegebenenfalls Comonomeren in der Suspensionsphase,
iii) Fortsetzen der Polymerisation,
iv) Zugabe des Treibmittels während oder nach des Polymerisationsschritts,
v) Abkühlen und dann Abtrennen des Granulats von dem Wasser.

11. Kontinuierliches Verfahren zur Herstellung von expandierbarem Polymergranulat in Masse mit den folgenden Schritten:
i) kontinuierliches Bereitstellen, in einem Massenpräpolymerisationsreaktor (oder dem ersten von einem Kaskaden-Reaktor), eines Stroms von:
i1) Styrolmonomer, p-tert-Butylstyrol-Comonomer und gegebenenfalls einem oder mehreren weiteren Comonomeren,
i2) mindestens einer Additivlösung und
i3) gegebenenfalls rückgeführtem Monomer,
ii) kontinuierliches Polymerisieren in dem Präpolymerisationsreaktor oder der Reihe von Kaskaden-Reaktoren,
iii) Zugabe von athermanen Füllstoffen und gegebenenfalls weiteren Additiven,
iv) Entgasen des Polymers,
v) Einspeisen des Polymers im geschmolzenen Zustand in den Extruder,
vi) gegebenenfalls Zugabe eines Flammhemmsystems, einschließlich synergistischer Verbindung und thermischen Stabilisatoren,
vii) Zugabe des Treibmittels,
viii) Extrudieren des homogenen Polymergemischs und
ix) Pelletieren in einer Unterwasser-Pelletiervorrichtung, um so das Granulat zu erhalten.

12. Expandierbares Copolymergranulat, erhältlich in dem Verfahren gemäß einem der Ansprüche 9 bis 11.

13. Expandierte Copolymer-Zusammensetzung, die
a. vinylaromatisches Copolymer, das Styrolmonomer und p-tert-Butylstyrol-Comonomer enthält, und
b. ein oder mehrere athermane Additive umfasst,
wobei das vinylaromatische Copolymer vorzugsweise 1 bis 99 Gew.-% Styrolmonomer und 99 bis 1 Gew.-% p-tert-Butylstyrol-Comonomer enthält (bezogen auf die Gesamtmenge Monomer).

14. Expandierte Copolymer-Zusammensetzung nach Anspruch 13, wobei die expandierte Copolymer-Zusammensetzung erhältlich ist aus dem expandierbaren Copolymergranulat gemäß Anspruch 12.

## Revendications

1. Utilisation d'un comonomère de p-tert-butylstyrène pour augmenter la température de transition vitreuse (Tg) d'un polymère de vinyle aromatique expansé, dans laquelle ledit polymère
i) est préparé à partir d'un monomère de styrène et
ii) contient un ou plusieurs additifs athermanes.

2. Utilisation selon la revendication 1, dans laquelle l'additif athermane est sélectionné parmi les matériaux de poudre inorganiques, le graphite, le coke de pétrole, le noir de carbone graphité, les oxydes de graphite, le graphène, et les mélanges de ceux-ci.

3. Utilisation selon la revendication 2, dans laquelle l'additif athermane est sélectionné parmi la silice, le noir de carbone, le phosphate de calcium, et les mélanges de ceux-ci.

4. Utilisation selon la revendication 3, dans laquelle le composant ii) est une combinaison de
a) un composant minéral contenant de la silice amorphe, du phosphate de calcium, ou des mélanges de ceux-ci, et
b) du noir de carbone.

5. Utilisation selon la revendication 4, dans laquelle
a1) la silice est amorphe et a
- une surface BET, telle que mesurée selon la description, de 3 à 80 m²/g,
- une distribution de la taille de particules, telle que mesurée selon la description, dans la plage de 3 nm à 1000 nm, et
la silice, si elle est utilisée, est présente en une quantité de 0,1 à moins de 2 % en poids sur la base du poids du copolymère,
a2) le phosphate de calcium a une taille de particules, telle que mesurée par diffraction laser, de 0,1 µm à 20 pm, et le phosphate de calcium, s'il est utilisé, est présent en une quantité de 0,1 à 10 % en poids, sur la base du poids du copolymère, et
b) le noir de carbone a
- une surface BET, telle que mesurée selon ASTM 6556, de plus de 40 jusqu'à 250 m²/g, et
- une teneur en soufre dans la plage de 50 à 20 000 ppm, telle que mesurée selon ASTM D 1619, et
le noir de carbone est présent en une quantité de 0,1 à 12 % en poids, sur la base du poids du copolymère.

6. Utilisation selon l'une quelconque des revendications précédentes dans laquelle le copolymère de vinyle aromatique est composé de 1 à 99 % en poids de monomère de styrène et de 99 à 1 % en poids d'un comonomère de p-tert-butylstyrène (sur la base de la quantité totale de monomère).

7. Utilisation selon la revendication 6, dans laquelle le copolymère de vinyle aromatique est composé de 50 à 98 % en poids de monomère de styrène et de 50 à 2 % en poids de comonomère de p-tert-butylstyrène (sur la base de la quantité totale de monomère).

8. Utilisation selon la revendication 7, dans laquelle le copolymère de vinyle aromatique est composé de 75 à 95 % en poids de monomère de styrène et de 25 à 5 % en poids de comonomère de p-tert-butylstyrène (sur la base de la quantité totale de monomère).

9. Procédé d'extrusion pour la préparation d'un granulat de polymère expansible comprenant les étapes suivantes :
i) charge d'un copolymère de vinyle aromatique contenant un monomère de styrène et un comonomère de p-tert-butylstyrène (et facultativement un homopolymère de vinyle aromatique) dans une extrudeuse,
ii) ajout d'un additif ou d'additifs athermanes, et facultativement d'un stabilisant thermique et d'un extincteur de flamme,
iii) injection d'un agent de soufflage dans la fusion,
iv) extrusion du mélange homogène, et
v) pastillage du mélange dans une pastilleuse immergée, pour obtenir le granulat.

10. Procédé de polymérisation en suspension aqueuse pour la préparation d'un granulat de polymère expansible comprenant les étapes :
i) de fourniture d'un mélange comprenant
i1) au moins un agent de suspension qui est un sel d'acide inorganique,
i2) au moins un stabilisant de suspension sélectionné dans le groupe des composés actifs de surface anioniques et/ou des composés de poids moléculaire élevé, et
i3) de l'eau,
ii) ajout d'un monomère de styrène, d'un comonomère de p-tert-butylstyrène, et facultativement d'un ou plusieurs comonomères au mélange, et ensuite, ajout
ii1) d'un adjuvant de suspension polymère facultatif,
ii2) d'une charge athermane,
ii3) d'un ignifuge
ii4) d'un extincteur de flamme, et
ii5) d'au moins un peroxyde en tant qu'initiateur de réaction, puis
ensuite polymérisation du monomère et des comonomères facultatifs dans la phase de suspension,
iii) poursuite de la polymérisation
iv) ajout de l'agent de soufflage pendant ou après l'étape de polymérisation,
v) refroidissement, puis séparation du granulat de l'eau.

11. Procédé de masse continu pour la préparation d'un granulat de polymère expansible comprenant les étapes suivantes :
i) fourniture en continu à un réacteur de prépolymérisation de masse (ou au premier à partir d'un réacteur en cascade) d'un courant :
i1) d'un monomère de styrène, d'un comonomère de p-tert-butylstyrène, et facultativement d'un ou plusieurs comonomères,
i2) d'au moins une solution d'additif, et
i3) facultativement d'un monomère recyclé,
ii) poursuite de la polymérisation dans le réacteur de prépolymérisation ou de la séquence de réacteurs en cascade,
iii) ajout de charges athermanes, et facultativement d'autres additifs,
iv) dégazage du polymère,
v) charge du polymère dans un état fondu dans l'extrudeuse,
vi) facultativement ajout d'un système ignifuge comportant un synergiste et des stabilisants thermiques,
vii) injection de l'agent de soufflage,
viii) extrusion du mélange polymère homogène, et
ix) pastillage dans une pastilleuse immergée, pour obtenir le granulat.

12. Granulat de copolymère expansible pouvant être obtenu dans le procédé selon l'une quelconque des revendications 9 à 11.

13. Composition de copolymère expansé comprenant
a. un copolymère de vinyle aromatique contenant un monomère de styrène et un comonomère de p-tert-butylstyrène et
b. un ou plusieurs additifs athermanes ;
de préférence dans laquelle le copolymère de vinyle aromatique est composé de 1 à 99 % en poids de monomère de styrène et de 99 à 1 % en poids de comonomère de p-tert-butylstyrène (sur la base de la quantité totale de monomère).

14. Composition de copolymère expansé selon la revendication 13, dans laquelle la composition de copolymère expansé peut être obtenue à partir du granulat de copolymère expansé selon la revendication 12.
